# EUROPEAN PATENT APPLICATION

(11) **EP 1 191 251 A2**
(43) Date of publication of application: **27.03.2002**
(21) Application number: 01120733.9
(22) Date of filing: 05.09.2001
(51) Int. Cl.: F16F 9/348, F16F 9/342

(54) **Double-acting shock absorber with progressive-damping stroke limiting device, particularly for vehicle suspensions**

(30) Priority: 26.09.2000 IT BO000552
(71) Applicant: PAIOLI S.p.A., 40019 S. Agata Bolognese (Bologna) (IT)
(72) Inventor: Francia, Giancarlo, 40139 Bologna (IT)
(74) Representative: Modiano, Guido, Dr.-Ing.

(57) **Abstract**

A double-acting shock absorber (1) with progressive-damping stroke limiting device, particularly for vehicle suspensions comprising: a cylinder; a piston (6), which is constituted by a shaft (7) which slidingly and hermetically passes through the upper head of the cylinder, a plate being fixed to the lower end of the shaft (7), which is partly crossed axially by a hole (8a), the plate being able to slide hermetically in the cylinder; a pin (23) with a frustum-shaped tip (23a), which is fixed to the lower head (4) of the cylinder and is suitable to enter the hole (8a) of the shaft (7) in order to close it partially or completely. The shock absorber is constituted by a single plate (21) and comprises oil passage ports, which are provided in the plate (21) and in the shaft (7) and respectively connect one another the two faces of the plate, the face of the plate (21) that is directed toward the upper head to the hole (8a) of the shaft (7), and the lower inlet of the hole of the shaft to a region of the shaft that lies above the plate (21), two deformable membranes (31,32) being associated with the upper and lower surfaces of the plate (21) and being suitable to selectively block the ports fully or partially during the extension or compression of the shock absorber.

## Description

The present invention relates to a double-acting shock absorber with progressive-damping stroke limiting device, particularly for vehicle suspensions.

In the particular field of vehicle suspensions, double-acting shock absorbers, i.e., shock absorbers which perform their action both during compression and during extension are used and are sometimes provided with a progressive-damping stroke limiting device which makes them stiffer as the compression stroke limit is approached. Such conventional shock absorbers have shortcomings in that they usually comprise a piston composed of two plates which must be mounted and fixed at the end of the movable shaft so that they are correctly orientated with respect to each other and appropriately spaced: this entails a rather high number of components and a certain laboriousness for the assembly operations.

The aim of the present invention is to obviate such shortcomings of conventional shock absorbers, by providing a double-acting shock absorber with progressive-damping stroke limiting device, particularly for vehicle suspensions, which is constituted by a very small number of components which allow elementary assembly operations which can be performed rapidly.

Within this aim, an object of the present invention is to provide a structure which is simple, relatively easy to manufacture, safe in use, effective in operation, and relatively low in cost.

This aim and this and other object which will become better apparent hereinafter are achieved by the present double-acting shock absorber with progressive-damping stroke limiting device, particularly for vehicle suspensions, comprising: a cylinder; a piston, which is constituted by a shaft which slidingly and hermetically passes through the upper head of said cylinder, a plate being fixed to the lower end of said shaft, which is partly crossed axially by a hole, said plate being able to slide hermetically in said cylinder; a pin with a frustum-shaped tip, which is fixed to the lower head of the cylinder and is suitable to enter the hole of said shaft in order to close it partially or completely; characterized in that it is constituted by a single plate and comprises oil passage ports, which are provided in the plate and in the shaft and respectively connect one another the two faces of the plate, the face of the plate that is directed toward the upper head to the hole of said shaft, and the lower inlet of the hole of the shaft to a region of the shaft that lies above the plate, two deformable membranes being associated with the upper and lower surfaces of said plate and being suitable to selectively block said ports fully or partially during the extension or compression of said shock absorber.

Further characteristics and advantages of the present invention will become better apparent from the following detailed description of a preferred but not exclusive embodiment of a double-acting shock absorber with progressive-damping stroke limiting device, particularly for vehicle suspensions, according to the invention, illustrated only by way of non-limitative example in the accompanying drawings, wherein:
Figure 1 is a sectional front view, taken along a diametrical plane, of a double-acting shock absorber with progressive-damping stroke limiting device, particularly for vehicle suspensions, according to the invention, during compression;
Figure 2 is a sectional front view of a shock absorber during greater compression than in Figure 1;
Figure 3 is a sectional front view of the shock absorber in the configuration of almost maximum contraction and during extension;
Figure 4 is a sectional front view of a shock absorber during greater extension than shown in Figure 3;

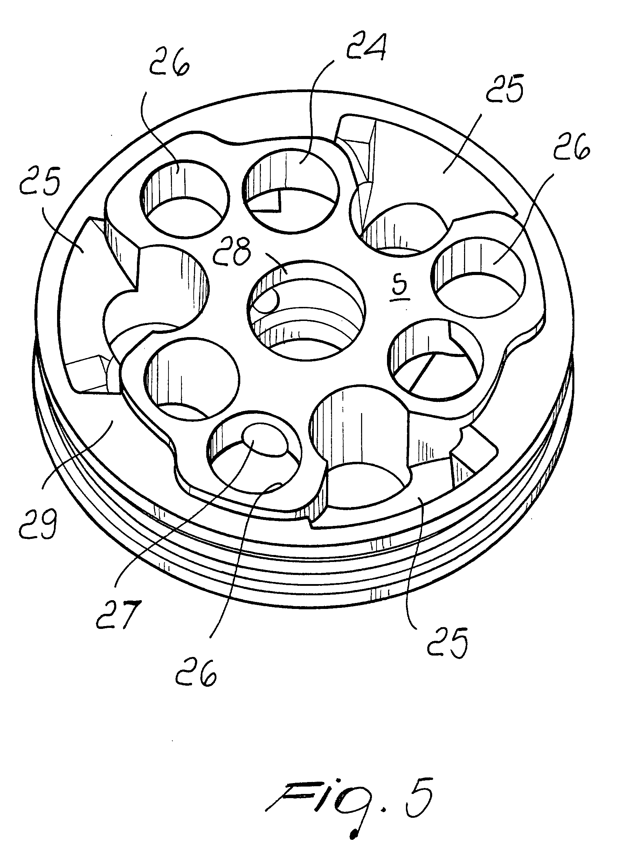

Figure 5 is a top perspective view of the plate of the shock absorber (in enlarged scale with respect to the scale of Figures 1 and 2);

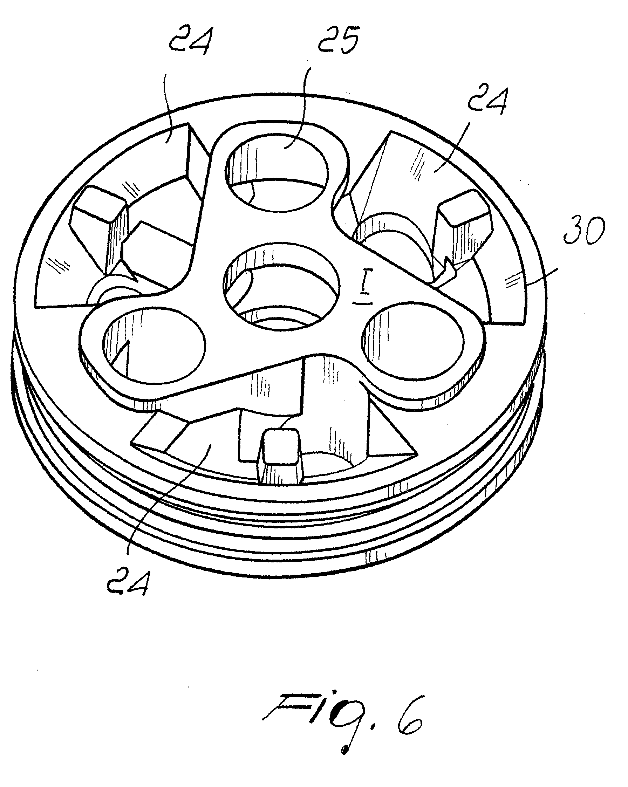

Figure 6 is a bottom perspective view of the shock absorber.

With reference to the figures, the reference numeral 1 generally designates a double-acting shock absorber with progressive-damping stroke limiting device, particularly for vehicle suspensions, according to the invention.

The shock absorber 1 comprises a cylinder 2, to the base of which a lower head 4 is screwed hermetically by means of a toroidal ring 3; two fixing rings 5a and 5b are screwed below the cylinder 2.

The reference numeral 6 generally designates a piston constituted by a shaft 7 which, in a known manner, slidingly and hermetically passes through the upper head of the cylinder, not shown in the figures, and whose lower end is partially crossed axially by a hole 8a which tapers upward in the portion 8b communicating with the outer surface by way of two radial ports 9a and 9b; the hole 8a is connected to the outer surface of the shaft 7 by way of a series of upper radial openings 10 and a series of lower radial openings 11, each series being constituted by four openings.

A bush 12 is screwed in a downward region of the shaft 7, and a tubular spacer 13 for fixing a lower plate 14 acts thereon.

The lower plate 14 is constituted by an annular body which is affected, in its upper part, by an annular groove 15 arranged at the openings 11; the groove 15 is connected, by way of a series of small radially inclined holes 16, to an annular slot 17 of the lower surface of the lower plate at which an elastic lamina 18 acts; said lamina is loaded by a spiral spring 19 and hinders the flow of the oil.

A single plate 21 is clamped between the lower plate 14 and an overlying disk 20 which abuts against an external wider diameter 7a of the shaft 7, and can slide in the cylinder 2 hermetically by means of rings 22 accommodated in respective seats of the cylindrical surface of the plate.

A pin 23 with a frustum-shaped tip 23a is fixed to the head 3 of the cylinder and is suitable to enter the hole of the shaft in order to close it partially or completely; a washer 12a is fitted loosely in the lower inlet of the bush 12 and can self-center, when the portion 23a of the pin enters, in the corresponding seat formed in the bush 12 in order to form a seal against the frustum-shaped outer surface of said pin 23.

Ports 24, 25 for the passage of the oil are provided in the plate and in the shaft and respectively connect one another the upper and lower faces S and I of the plate. The ports 24 comprise a series of three passages which pass through the plate and diverge downwardly, while the ports 25 comprise a series of three openings which pass through the plate and diverge upwardly.

Ports 26 are also provided which connect the face S of the plate to the hole 8a of the shaft and are constituted by a series of three blind ports which are open upwards, each connected by way of inclined and substantially radial ducts 27 to an annular groove 28 of the central hole of the plate which is aligned with the upper radial openings 10 of the shaft 7.

The lower inlet of the hole of the shaft is connected by way of the ports 9a, 9b to a region of the shaft that lies above the plate 21.

The upper surface S of the plate 21 is peripherally provided with a channel 29 which defines a plane at which the diverging inlets of the ports 25 end, while the circular ports 26 and 24 end at the plans of the surface S; the lower surface I of the plate 21 is peripherally provided with a channel 30 which defines a plane at which the diverging inlets of the ports 24 end, while the circular ports 25 end at the plane of the surface I.

Two deformable membranes 31, 32 rest against the surfaces S and I, are associated with the upper and lower surfaces of the plate, and selectively close the ports fully or partially during the extension or compression of the shock absorber.

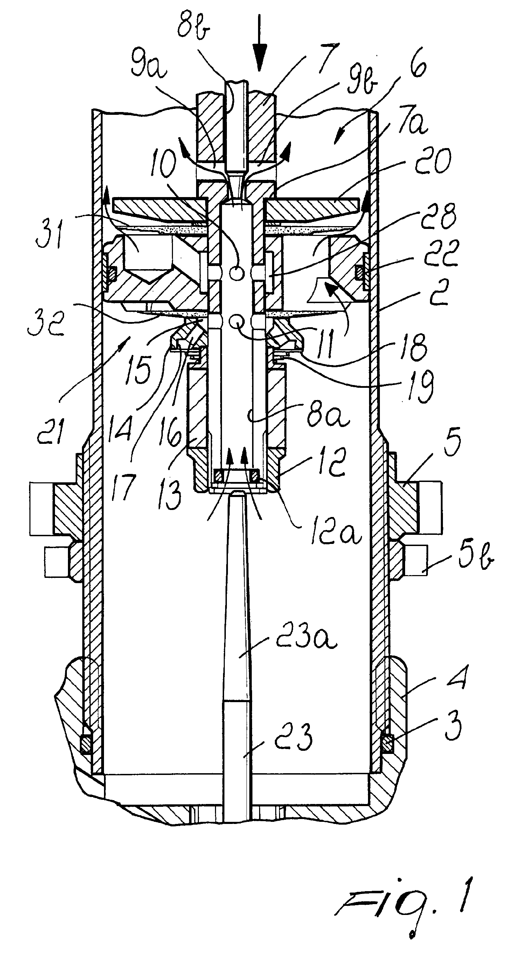

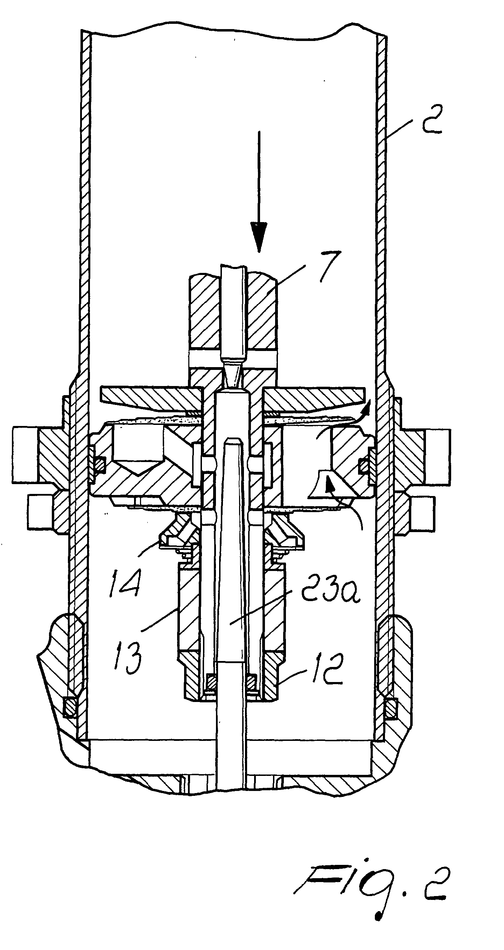

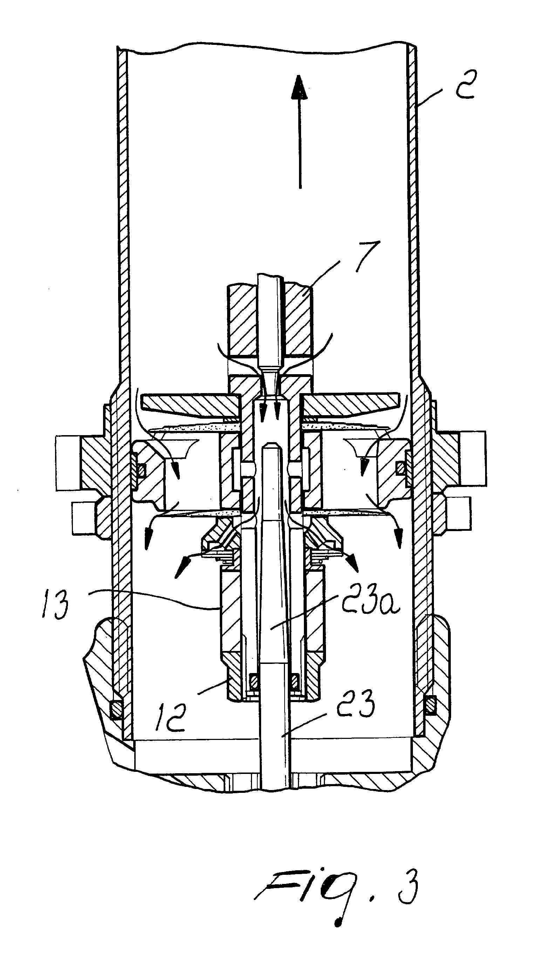

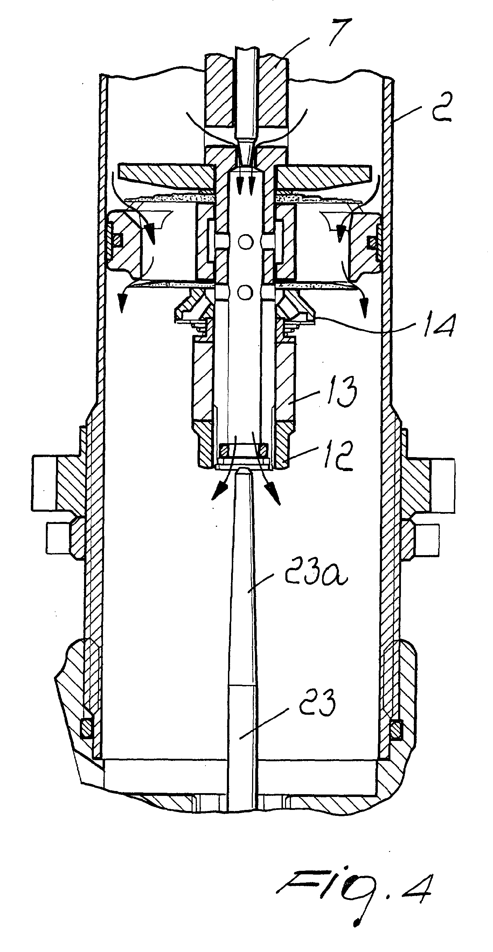

In Figures 1, 2 and in Figures 3 and 4, black arrows indicate the flows of the oil during compression and extension, respectively.

The operation of the invention is as follows: in the double-acting shock absorber according to the invention there is a substantially conventional progressive-damping stroke limiting device constituted by the frustum-shaped pin 23a, which, as the plate approaches the end of its stroke, progressively stiffens the shock absorber.

It has thus been shown that the invention achieves the intended aim and object, and in particular that thanks to the oil passage ports provided in the shaft and in the single plate the assembly operations are extremely simplified and accelerated, and that the shock absorber according to the invention is constituted by a particularly small number of components.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the scope of the protection of the appended claims.

The disclosures in Italian Patent Application No. BO2000A000552 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A double-acting shock absorber with progressive-damping stroke limiting device, particularly for vehicle suspensions, comprising: a cylinder; a piston, which is constituted by a shaft which slidingly and hermetically passes through the upper head of said cylinder, a plate being fixed to the lower end of said shaft, which is partly crossed axially by a hole, said plate being able to slide hermetically in said cylinder; a pin with a frustum-shaped tip, which is fixed to the lower head of the cylinder and is suitable to enter the hole of said shaft in order to close it partially or completely; **characterized in that** it is constituted by a single plate and comprises oil passage ports, which are provided in the plate and in the shaft and respectively connect one another the two faces of the plate, the face of the plate that is directed toward the upper head to the hole of said shaft, and the lower inlet of the hole of the shaft to a region of the shaft that lies above the plate, two deformable membranes being associated with the upper and lower surfaces of said plate and being suitable to selectively block said ports fully or partially during the extension or compression of said shock absorber.

2. The shock absorber according to claim 1, **characterized in that** said ports comprise a series of passages which pass through the plate and diverge downwardly, a series of passages which pass through the plate and diverge upwardly, and a series of blind ports which are open upwards and are connected by way of inclined substantially radial ducts to an annular groove of the central hole of the plate.

3. The shock absorber according to one or more of the preceding claims, **characterized in that** each one of said series of ports is constituted by three annularly distributed ports.

4. The shock absorber according to one or more of the preceding claims, **characterized in that** a bush is fixed in a downward region to the shaft and **in that** a washer is loosely fitted in the lower inlet of said bush, said washer being suitable to self-center, when the pin penetrates, in order to form a seal on the outer surface of the pin.
